# EUROPÄISCHE PATENTSCHRIFT

(11) **EP 1 767 471 B1**
(45) Veröffentlichungstag und Bekanntmachung des Hinweises auf die Patenterteilung: **07.07.2010**
(21) Anmeldenummer: 06018415.7
(22) Anmeldetag: 02.09.2006
(51) Int. Cl.: B65G 1/137, B66F 9/075

(54) **System zur Erkennung und Verwaltung von Paletten**
System for identification and administration of pallets
Système pour l'identification et l'administration de palettes

(30) Priorität: 24.09.2005 DE 202005015095 U
(43) Veröffentlichungstag der Anmeldung: 28.03.2007
(73) Patentinhaber: Jungheinrich Aktiengesellschaft, 22047 Hamburg (DE)
(72) Erfinder: Magens, Ernst-Peter, Dr.-Ing., 22949 Ammersbek (DE); Mänken, Frank, Dr.-Ing., 24558 Henstedt-Ulzburg (DE); von Werder, Martin, Dipl.-Ing., 22949 Ammersbek (DE)
(74) Vertreter: Hauck Patent- und Rechtsanwälte

(56) Entgegenhaltungen:
- EP-A- 1 710 204
- EP-A- 1 829 813
- EP-A- 1 898 341
- EP-A- 1 995 188
- WO-A-92/00233
- DE-A1- 10 342 767
- DE-A1-102006 045 831
- DE-U1- 20 022 617
- ES-A1- 2 288 385
- JP-A- 2002 321 899
- US-A- 5 006 996
- US-A1- 2002 070 862
- US-A1- 2005 200 457

## Beschreibung

Die Erfindung bezieht sich auf ein System zur Erkennung und Verwaltung von Paletten nach dem Anspruch 1.

Im Rahmen der Verbesserung der Abläufe von logistischen Ketten kommen vermehrt RFID-unterstützte Prozesse zur Anwendung. Der Ladungsträger, z.B. die Palette oder auch der Lagerplatz, werden mit Kennungen versehen, z.B. mit Transpondern, in welchen Daten gespeichert sind. Mit Hilfe von Schreib-/Lese-geräten können die Transponder mit Daten beschrieben und die Dateninhalte aus diesen ausgelesen werden. Der Einsatz derartiger Transponder in Verbindung mit Flurförderzeugen ist etwa in "Hebezeuge und Fördermittel", Berlin 45 (2005) 5, Seiten 246 und 247 beschrieben.

Aus US 6,669,089 ist ein Flurförderzeug bekannt geworden, bei dem eine Mehrzahl von Antennen in der Nähe des Gabelträgers eines Flurförderzeugs angeordnet sind. Mit Hilfe der Antennen sowie separater Auswerte-, Anzeige- und Bedieneinheiten können RFID-Transponder am Ladungsträger mit Daten beschrieben bzw. deren Inhalte ausgelesen werden. An den Paletten sind mindestens zwei Transponder angeordnet, die diagonal zum Ladungsträger angeordnet sind. Dadurch ergibt sich ein relativ kurzer Abstand zwischen Antenne und Transponder, allerdings mit dem Nachteil, daß pro Ladungsträger mindestens zwei Transponder notwendig sind.

Aus NL 9401836 ist bekannt, einen Transponder pro Ladungsträger einzusetzen. Die Antennen zum Lesen und Beschreiben des Transponders sind innerhalb der Gabelarme untergebracht. Hierdurch wird ein kurzer Leseabstand möglich, jedoch werden die Gabelarme durch die integrierten Antennen geschwächt, und die Abschirmung durch die Gabelarme schränkt die Funktionsfähigkeit der Antennen ein.

Aus DE 20 2005 005 409 U1 ist bekannt, eine Antenne an dem Träger einer Lastgabel anzuordnen und zwar hinter einer Ebene, welche durch die Mittenebene durch Traversen des Gabelträgers gebildet ist.

Aus US 5,006,996 ist ein System gemäß dem Oberbegriff des Anspruchs 1 zum Erkennen, Lagern, wieder Auffinden unterteilen von Waren bekannt. Das System besteht aus einem Flurförderzeug, das mit einer an einem Träger angebrachten Lastgabel ausgestattet ist. Ein Empfänger 24 ist mittig an dem Träger zwischen den Armen der Lastgabel angeordnet und ausgebildet um Funkwellen von Sendern an Paletten oder Lagerplätzen zu empfangen. Die empfangenen Signale werden an eine auf dem Dach des Flurförderzeugs vorgesehene Sendeeinheit und an ein für den Fahrer sichtbares Datenterminal weitergeleitet.

Bei allen bekannten Ausführungen sind neben den Antennen weitere separate Einrichtungen notwendig, die zur Auswertung der Antennensignale dienen. Die Anzeige der Signale erfolgt in den bekannten Fällen durch ein Display oder einen Monitor eines in der Fahrerkabine angeordneten Bordcomputers. Bedingt durch die Gegebenheiten am Flurförderzeug und aufgrund relativ schwacher Leistungspegel der Antennen sind die erforderlichen Verbindungen zwischen den Komponenten störanfällig.

Der Erfindung liegt die Aufgabe zugrunde, ein System zur Erkennung und Verwaltung von Paletten zu schaffen, das einfach aufgebaut und wenig störanfällig ist.

Diese Aufgabe wird durch die Merkmale des Patentanspruchs 1 gelöst.

Bei dem erfindungsgemäßen System sind alle für die Kommunikation mit Transpondern sowie für die Auswertung von Signalen der Transponder erforderlichen Komponenten in einem einzigen boxförmigen Gehäuse aufgenommen, insbesondere eine Lese- und Schreibeinheit und eine Sende- und Empfangsschaltung sowie eine Auswerteeinheit. Die Auswerteeinheit ist mit einer Schnittstelle zu einem Bordcomputer im Flurförderzeug versehen. Das boxförmige Gehäuse ist an der Unterseite der unteren Traverse eines Trägers für die Lastgabel zwischen den Gabelarmen angebracht. An jeder Palette ist ein Transponder angeordnet, und zwar an einer Stirnseite oder innerhalb eines mittigen Klotzes der Palette. Dadurch liegen Antenne und Transponder bei der Aufnahme einer Palette annähernd in einer Höhe. Unabhängig von der Orientierung der aufgenommenen Palette ist der Abstand zwischen Antenne und Transponder nahezu gleich. Transponder und boxförmiges Gehäuse sind wirksam gegen Beeinträchtigungen beim Handhaben des Flurförderzeugs und der Paletten geschützt. Alle für die Kommunikation mit Transpondern erforderlichen elektrischen Komponenten sind im Gehäuse untergebracht sowie auch die Auswerteeinheit zum Auswerten der Signale von den Transpondern, so daß lediglich ein einziges Verbindungskabel zum Bordcomputer erforderlich ist.

Nach einer Ausgestaltung der Erfindung ist auch an mindestens einem Lagerplatz ein Transponder vorgesehen. Wird der Lagerplatz von einem Regalsystem gebildet, werden nach einer weiteren Ausgestaltung der Erfindung Transponder am vorderen, dem Fahrzeug beim Ein- und Ausstapeln zugewandten Eingang der Regalauflager angeordnet.

Befindet sich der Lagerplatz auf einem Untergrund, z.B. in einer Halle, dann wird nach einer alternativen Ausgestaltung der Erfindung ein Transponder unterhalb des Lagerplatzes angeordnet.

Das boxförmige, quaderförmige Gehäuse, das beispielsweise aus Kunststoff geformt ist, ist nach einer weiteren Ausgestaltung der Erfindung von einem U-förmigen Bügel aufgenommen, der an der Unterseite der Traverse angebracht ist. Er kann nach einer weiteren Ausgestaltung der Erfindung schwenkbar aufgehängt sein, um die Winkelstellung des Bügels und damit der Schreib- und Leseeinheit in Grenzen einzustellen. Dadurch kann eine bessere Ausrichtung der Antenne auf die Transponder erzielt werden.

Die Erfindung wird nachfolgend anhand von Zeichnungen näher erläutert.
- Fig. 1: zeigt in Seitenansicht eine Lastgabel für ein Flurförderzeug bei Aufnahme einer Palette von einem Regal.
- Fig. 2: zeigt perspektivisch die Seitenansicht eines Teils der Lastgabel des Flurförderzeugs nach Fig. 1.
- Fig. 3: zeigt perspektivisch die Lastgabel nach Fig. 3 schräg von vom.

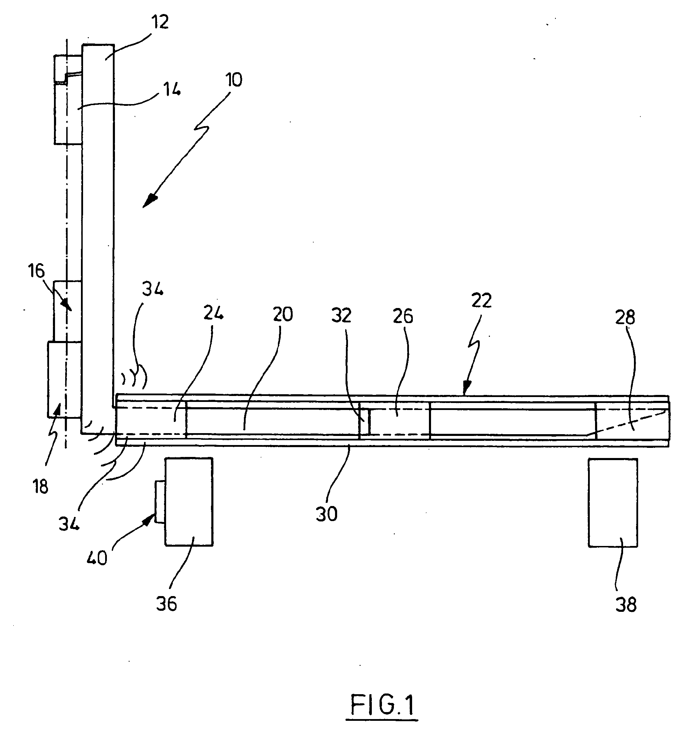

In Fig. 1 ist eine Lastgabel 10 eines nicht weiter dargestellten Flurförderzeugs zu erkennen. Mit ihrem Gabelrücken 12 ist die Lastgabel an einem Gabelträger angebracht, von dem ein oberes Querprofil 14 und ein unteres Querprofil 16 zu erkennen ist. An der Unterseite des unteren Querprofils ist ein boxförmiges Gehäuse 18 angebracht. Seine Vorderseite grenzt an die Ebene der Hinterkante der Gabelrücken 12 an.

Die Gabelarme 20 sind in eine Palette 22 eingefahren, z.B. in eine Europalette. Eine solche Palette besitzt an den Längsseiten und in der Längsmitte drei Reihen Klötze, wobei in Fig. 1 die mittige Reihe mit Klötze 24, 26, 28 gezeigt ist, durch welche die Auflagebretter mit Standbrettern verbunden sind. In Fig. 1 ist das mittlere Standbrett mit 30 bezeichnet. Wie außerdem in Fig. 1 angedeutet, ist an der Frontseite des mittigen Klotzes 26 (in Längsrichtung der Palette betrachtet) ein Transponder 32 angebracht. Bei Aufnahme der Palette am anderen Ende liegt der Transponder auf der Rückseite des Klotzes 26. Er ist als passiver Transponder ausgeführt.

In dem quaderförmigen Gehäuse 18 befindet sich eine Antenne, eine Empfangs- und Sendeschaltung sowie eine Auswerteeinheit (nicht gezeigt). Die Bordspannung des Flurförderzeugs versorgt die Sendeschaltung, die z.B. ein UHF-Signal sendet, wie durch 34 angedeutet. Das UHF-Signal, beispielsweise mit einer Frequenz von 868 MHZ, wird vom Transponder 32 empfangen. Dieser wird zur Abstrahlung eines Signals angeregt, dessen Inhalt im Speicher des Transponders abgelegt ist. Die Empfangsschaltung erhält das vom Transponder kommende Signal, das in der Auswerteschaltung ausgewertet wird. Dieses Signal enthält in erster Linie eine Kennung der Palette und ggf. des zugehörigen Lagerplatzes. Mit Hilfe der Lese- und Schreibeinheit kann eine derartige Information oder eine andere der Palette oder dem Lagerplatz zugeordnete Information auch in den Speicher des Transponders 32 eingeschrieben werden.

In Fig. 1 wird die Palette 22 auf zwei horizontale im Schnitt gezeigte Tragprofile 36, 38 eines sonst nicht näher dargestellten Regals aufgesetzt bzw. von diesen abgehoben. Wie in Fig. 1 ferner zu erkennen, ist an der Vorderseite des vorderen horizontalen Tragprofils 36 ebenfalls ein Transponder 40 angeordnet. Mit Hilfe der Leseeinheit im Gehäuse 18 kann mithin auch der Lagerplatz im Regal identifiziert werden.

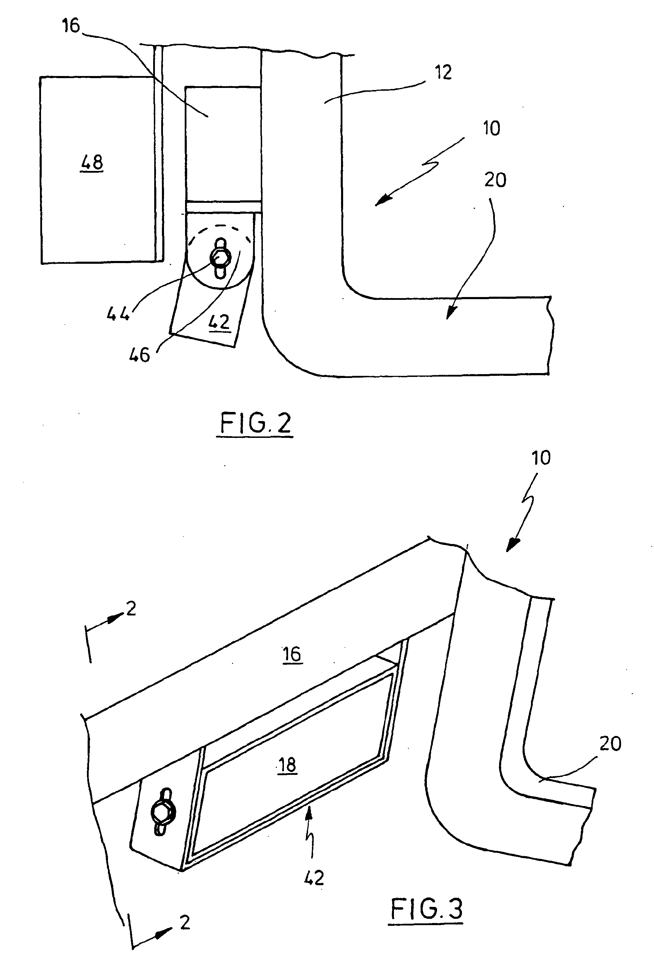

In Fig. 2 ist der untere Teil der Gabel 10 dargestellt sowie das untere Querprofil 16 des Gabelträgers. Man erkennt nach Fig. 2 und 3, daß das Gehäuse 18 an der Unterseite des unteren Querprofils 16 aufgehängt ist. Zu diesem Zweck ist ein U-förmiger metallischer Rahmen 42 vorgesehen, dessen Schenkel an den oberen Enden mit Hilfe von Schrauben 44 und Laschen 46 aufgehängt sind. Durch Lösen der Schrauben 44 kann die Winkelstellung des Gehäuses 18 geändert werden. Nach Erreichen des gewünschten Winkels werden die Schrauben 44 festgezogen. Wie erkennbar, ist in dem Bereich zwischen dem Gabelrücken 12 und der Unterseite des Gabelträgers bzw. der Ebene der Vorderseite der Hubgerüstprofile 48 Raum für die Anordnung des Gehäuses 18, das sich annähernd in der Mitte zwischen den Gabelarmen 20 bzw. Gabelrücken 12 befindet, wie dies aus Fig. 3 zu erkennen ist. Außerdem wird der Vorteil erhalten, daß die Antenne, die sich im Gehäuse 18 befindet, etwa in der Höhe liegt, in der sich der anzusprechende Transponder befindet, wenn mit der Gabel 10 eine Palette aufgenommen wird.

Wie schon erwähnt, befindet sich im Gehäuse 18 auch eine Auswerteeinheit, welche die vom Transponder 32 bzw. 40 kommenden Signale auswertet. Das Signal der Auswerteeinheit wird über ein nicht gezeigtes Kabel mit einem nicht gezeigten Bordcomputer des Flurförderzeugs verbunden. Auf einem Display in der Fahrerkabine des Flurförderzeugs kann dann das Signal ausgelesen werden. Es ist auch möglich, die Verbindung kontaktlos zu etablieren. Außerdem kann auch eine kontaktlose Verbindung über Radiowellen mit einer stationären Recheneinheit hergestellt werden, in welcher eine Lagerverwaltung vorgenommen wird.

Im Boden des Betriebsbereichs des Fahrzeugs können Transponder eingelassen sein, über die z.B. eine Navigation des Fahrzeugs möglich ist, und zwar entweder über eine Anzeige am Fahrerplatz oder durch Eingriff in die Lenkung und/oder in die Geschwindigkeitssteuerung.

## Patentansprüche

1. System zur Erkennung und Verwaltung von Paletten (22), die mittels eines Flurförderzeugs an Lagerplätzen abgelegt oder von diesen aufgenommen werden, mit den folgenden Merkmalen:
- das Flurförderzeug ist mit einer an einem Träger angebrachten Lastgabel (10) ausgestattet,
- ein boxförmiges Gehäuse (18), das alle für die Kommunikation mit Transpondern (32) sowie die Auswertung von Signalen der Transponder erforderlichen Komponenten enthält, insbesondere eine Lese- und Schreibeinheit, eine Sende- und Empfangsschaltung und eine Auswerteeinheit, und
- ein einziger Transponder (32) ist an einer Stirnseite des mittigen Klotzes (26) der Palette (22) angebracht.
**dadurch gekennzeichnet, dass**
- die Auswerteeinheit eine Schnittstelle zu einem Bordcomputer des Flurförderzeugs aufweist,
- das boxförmige Gehäuse (18) an der Unterseite der unteren Traverse (16) eines Trägers einer Lastgabel (10) zwischen den Gabelarmen (20) angebracht ist.

2. System nach Anspruch 1, **dadurch gekennzeichnet, dass** das System auch ein Regallager umfasst, das ein Regalauflager mit einem Längsträger aufweist, wobei das Regalauflager an dem dem Flurförderzeug zugewandten Eingang mit einem Transponder (40) an einem Längsträger versehen ist.

3. System nach Anspruch 1 oder 2, **dadurch gekennzeichnet, daß** an einem Lagerplatz ein Transponder vorgesehen ist.

4. System nach einem der Ansprüche 1 bis 3, **dadurch gekennzeichnet, daß** am Lagerplatz ein Transponder im Boden unterhalb des Lagerplatzes angeordnet ist.

5. System nach einem der Ansprüche 1 bis 4, **dadurch gekennzeichnet, daß** an der Unterseite der unteren Traverse (16) ein U-förmiger Bügel (42) angebracht ist, in dem das Gehäuse (18) aufgenommen ist.

6. System nach Anspruch 5, **dadurch gekennzeichnet, daß** der Bügel (42) um eine horizontale Achse schwenkbar aufgehängt und in einer eingenommenen Lage fixierbar ist.

7. System nach einem der Ansprüche 1 bis 6, **dadurch gekennzeichnet, daß** Transponder im Boden der Fahrwege des Fahrzeugs eingelassen sind zur Navigation des Fahrzeugs durch Anzeige am Fahrerplatz oder Eingriff in die Geschwindigkeitssteuerung des Fahrzeugs.

## Claims

1. System for identifying and managing pallets (22), which are placed at or picked up from bin locations by means of an industrial truck, with the following characteristics:
- the industrial truck has a loading fork (10) attached to a support,
- a box-shaped housing (18), which contains all components required for communicating with transponders (32) as well as evaluating signals from the transponders, in particular a read/write unit, a send/receive circuit and an evaluation unit, and
- a single transponder (32) is attached to the front side of the middle block (26) of the pallet (22),
**characterized in that**
- the evaluation unit has an interface to an on-board computer of the industrial truck,
- the box-shaped housing (18) is attached to the bottom side of the lower cross bar (16) of a support for the loading fork (10) between the fork arms (20).

2. System in accordance with claim 1, **characterized in that** the system also comprises a rack which comprises a rack support having a longitudinal support, wherein the rack support at the entrance that faces the industrial truck is provided with a transponder (40) on a longitudinal support.

3. System in accordance with claim 1 or 2, **characterized in that** a transponder is provided at a bin location.

4. System in accordance with claims 1 through 3, **characterized in that**, at the bin location, a transponder is arranged in the floor below the bin location.

5. System in accordance with claims 1 through 4, **characterized in that** a U-shaped bracket (42) used to pick up the housing (18) is attached to the bottom side of the lower cross bar (16).

6. System in accordance with claim 5, **characterized in that** the bracket (42) is suspended in a pivotable manner from a horizontal axis and can be fixed in a received position.

7. System in accordance with one of claims 1 through 6, **characterized in that** transponders are embedded in the floor of the track systems of the vehicle for navigating the vehicle via a display in the driver's cab or intervening in the speed control of the vehicle.

## Revendications

1. Système pour l'identification et l'administration de palettes (22), qui sont déposées dans des lieux de stockage ou enlevées de ceux-ci à l'aide d'un chariot élévateur, avec les caractéristiques suivantes:
le chariot élévateur est équipé avec une fourche de charge (10) montée sur un support,
un carter (18) en forme de boîte qui contient tous les composants nécessaires pour la communication avec des transpondeurs (32) ainsi que pour l'analyse de signaux des transpondeurs, notamment une unité de lecture et d'écriture, un circuit émission-réception et un module d'analyse, et
un seul transpondeur (32) est installé dans un côté frontal du bloc central (26) de la palette (22),
**caractérisé en ce que**
le module d'analyse comporte une interface à un ordinateur de bord du chariot élévateur,
le carter (18) en forme de boîte est installé dans la face inférieure de la traverse inférieure (16) d'un support d'une fourche de charge (10) entre les bras de fourche (20).

2. Système selon la revendication 1, **caractérisé en ce que** le système comporte aussi un entrepôt à rayonnages hauts qui présente un support de rayonnages avec un longeron, le support de rayonnages étant pourvu avec un transpondeur (40) sur un longeron chez l'entrée tournée vers le chariot élévateur.

3. Système selon la revendication 1 ou 2, **caractérisé en ce que** un transpondeur est pourvu dans un lieu de stockage.

4. Système selon l'une quelconque des revendications 1 à 3, **caractérisé en ce que** dans le lieu de stockage, un transpondeur est disposé dans le sol au-dessous du lieu de stockage.

5. Système selon l'une quelconque des revendications 1 à 4, **caractérisé en ce que** un arceau en forme d'U (42) est installé dans la face inférieure de la traverse inférieure (16), dans lequel le carter (18) est hébergé.

6. Système selon la revendication 5, **caractérisé en ce que** l'arceau (42) est suspendu de façon pivotante autour d'un axe horizontal et fixable dans une position occupée.

7. Système selon l'une quelconque des revendications 1 à 6, **caractérisé en ce que** des transpondeurs sont encastrés dans le sol des chemins de voyage du véhicule pour la navigation du véhicule par affichage dans la place pour le conducteur ou par intervention dans le réglage de vitesse du véhicule.
